Europäisches Patentamt

European Patent Office

Office européen des brevets

(19)

(11) **EP 1 343 022 A1**

(12) **EUROPÄISCHE PATENTANMELDUNG**

(43) Veröffentlichungstag:
**10.09.2003 Patentblatt 2003/37**

(51) Int Cl.7: **G01S 17/93**

(21) Anmeldenummer: **03004370.7**

(22) Anmeldetag: **03.03.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **08.03.2002 DE 10210301**

(71) Anmelder: **Valeo Schalter und Sensoren GmbH
74321 Bietigheim-Bissingen (DE)**

(72) Erfinder: **Schuler, Thomas
75446 Wiernsheim (DE)**

(74) Vertreter: **Dreiss, Fuhlendorf, Steimle & Becker
Patentanwälte
Postfach 10 37 62
70032 Stuttgart (DE)**

(54) **Verfahren und System zur Erfassung von Gegenständen im Nahbereich eines Fahrzeuges**

(57) Die Erfindung betrifft ein Verfahren und ein System zur Erfassung von Gegenständen im Nahbereich eines Fahrzeuges und/oder zur präventiven Kollisionswarnung eines Fahrzeuges, mit einer am Fahrzeug angeordneten, den Nahbereich bzw. die Umgebung des Fahrzeuges erfassenden Kamera, mit einer Strahlenquelle, die einen Sendöstrahl in den von der Kamera erfassten Bereich sendet, wobei der an dem Untergrund oder an einem Gegenstand reflektierte Sendestrahl auf dem Empfangsarray der Kamera abgebildet wird und aus der Position des abgebildeten Sendestrahls auf dem Empfangsarray bestimmt wird, ob Gegenstände im Strahlengang des Sendestrahles vorhanden sind.

Fig. 1

**Beschreibung**

Die Erfindung betrifft ein Verfahren und ein System zur Erfassung von Gegenständen im Nahbereich eines Fahrzeuges und/oder zur präventiven Kollisionswarnung eines Fahrzeuges. Die Erfindung hat ferner ein Steuergerät zur Steuerung eines solchen Verfahrens und ein Fahrzeug mit einem derartigen System zum Inhalt.

Verfahren und Systeme zur Erfassung von Gegenständen im Nahbereich eines Fahrzeugs sind in vielfältiger Art und Weise bekannt. Dabei finden Abstandsmesssensoren Verwendung, die beispielsweise in Form von Ultraschallsensoren im Bereich von Stoßfängern des Fahrzeugs angeordnet sind. Unterschreitet das Fahrzeug zu einem Gegenstand einen vorgegebenen Grenzwert, so kann dies mittels der Sensoren erfasst werden und dem Fahrzeuglenker mitgeteilt werden.

Aus dem Stand der Technik sind Fahrzeuge bekannt, die eine Kamera umfassen, mit der für den Fahrzeuglenker nicht sichtbare Bereiche dem Fahrzeuglenker visuell angezeigt werden. Solche Kamerasysteme finden insbesondere bei unübersichtlichen Fahrzeugen Verwendung und arbeiten rein passiv.

Der vorliegenden Erfindung liegt nun die Aufgabe zugrunde, ein Verfahren und ein System zur Erfassung von Gegenständen im Nahbereich eines Fahrzeuges und/oder zur präventiven Kollisionswarnung eines Fahrzeuges bereitzustellen, das bei Vorhandensein eines Kamerasystems auf Abstandsmesssensoren, insbesondere auf Ultraschallsensoren, verzichtet werden kann.

Diese Aufgabe wird gelöst durch ein Verfahren und/oder ein System, mit einer am Fahrzeug angeordneten, den Nahbereich bzw. die Umgebung des Fahrzeuges erfassenden Kamera, mit einer Strahlenquelle, die einen Sendestrahl in den von der Kamera erfassten Bereich sendet, wobei der an dem Untergrund oder an einem Gegenstand reflektierte Sendestrahl auf dem Empfangsarray der Kamera abgebildet wird und aus der Position des abgebildeten Sendestrahls auf dem Empfangsarray bestimmt wird, ob Gegenstände im Strahlengang des Sendestrahles vorhanden sind. Sind keine Gegenstände im Strahlengang des Sendestrahles vorhanden und trifft der Sendestrahl auf den Untergrund, so wird er auf dem Empfangsarray in einem charakteristischen Bereich abgebildet. Trifft der Sendestrahl hingegen auf einen Gegenstand, also nicht auf den Untergrund, so wird der Sendestrahl in einem anderen Bereich des Empfangsarrays abgebildet. Folglich kann aus der Position des abgebildeten Sendestrahls auf dem Empfangsarray bestimmt werden, ob in dem Strahlengang des Sendestrahls Gegenstände vorhanden sind oder nicht. Erfindungsgemäß wird vorteilhafterweise erreicht, dass zur Erkennung von Gegenständen im Nahbereich bzw. in der Umgebung des Fahrzeuges keine zusätzlichen Sensoren, wie beispielsweise Ultraschall- oder Radarsensoren, verwendet werden müssen.

Bei einer vorteilhaften Ausgestaltung der Erfindung wird aus dem Winkel des Sendestrahls gegenüber der Ebene des Untergrundes, auf dem sich das Fahrzeug befindet, und der Fahrzeuggeometrie der Abstand und die Höhe eines in dem Strahlengang des Sendestrahles vorhandenen Gegenstandes bestimmt.

Eine weitere vorteilhafte Ausgestaltung der Erfindung zeichnet sich dadurch aus, dass der von dem Fahrzeug zurückgelegte Weg, insbesondere mittels eines Wegmesssensors, erfasst wird und dass aus dem zurückgelegten Weg der Abstand eines in dem Strahlengang des Sendestrahles vorhandenen Gegenstandes bestimmt wird. Hierbei kann rückgeschlossen werden, ob sich das Fahrzeug dem Gegenstand nähert oder entfernt. Nähert sich der Gegenstand dem Fahrzeug, kann ferner berechnet werden, ob bzw. wann mit einer Kollision zu rechnen ist, auch wenn der Gegenstand aus fahrzeuggeometrischen Gründen von dem Sendestrahl oder der Kamera nicht mehr erfasst werden kann.

Eine bevorzugte Ausführungsform der Erfindung zeichnet sich dadurch aus, dass Mittel zur Auffächerung des Sendestrahls vorgesehen sind, so dass mehrere an dem Untergrund oder an einem Gegenstand reflektierte Sendestrahlen auf dem Empfangsarray der Kamera abgebildet werden. Hierdurch kann der von der Kamera erfasste Raum überwacht werden. Aufgrund von Positionsänderungen einzelner reflektierter Sendestrahlen auf dem Empfangsarray kann auf Gegenstände in dem von der Kamera erfassten Bereich rückgeschlossen werden. Bei entsprechender Auswertung der empfangenen Signale ist ferner denkbar, die Geometrie der erfassten Gegenstände zu bestimmen.

Eine Überwachung des Nahbereichs bzw. der Umgebung des Fahrzeuges kann ferner dadurch erfolgen, dass steuerbare Mittel zum Umlenken des Sendestrahles vorgesehen sind, die den Sendestrahl derart umlenken, dass er wenigstens abschnittsweise den von der Kamera erfassten Bereich abwandert. Der Sendestrahl tastet folglich die Umgebung auf einer vorgegebenen Bahn ab, wobei die reflektierte Sendestrahlbahn auf dem Empfangsarray abgebildet wird. Die steuerbaren Mittel des Sendestrahles können insbesondere einen von einem Steuergerät ansteuerbaren Spiegel umfassen. Je nach Steuerfrequenz kann ein mehr oder weniger genaues Abbild der Fahrzeugumgebung erstellt werden, wobei Steuerfrequenzen von einigen 10 kHz durchaus realisierbar sind.

Vorteilhaft ist, wenn der von der Kamera erfasste Bereich wenigstens weitgehend überwacht wird und bei der Gefahr einer Kollision entsprechende Maßnahmen eingeleitet werden. Derartige Maßnahmen können beispielsweise optische oder akustische Mitteilungen an den Fahrzeuglenker sein. Ferner ist denkbar, dass automatisch Sicherheitssysteme aktiviert werden, die zur Sicherheit der Fahrzeuginsassen beitragen. Beispielsweise können automatische Ausweich- oder Bremsmanöver veranlasst werden oder auch Gurtstraffer und Airbags aktiviert werden.

Als Sendestrahl hat sich ein Lichtstrahl, insbesondere ein Lichtstrahl eines IR LEDs, mit geringem Öffnungswinkel bewährt. Andere Sendestrahlen, beispielsweise auch Laserstrahlen, sind ebenfalls erfindungsgemäß denkbar.

Als Empfangsarray der Kamera hat sich ein CCD/CMOS-Array bewährt. Andere, entsprechende Arrays sind erfindungsgemäß ebenfalls denkbar.

Die eingangs genannte Aufgabe wird ferner gelöst durch ein Steuergerät zur Steuerung des erfindungsgemäßen Verfahrens sowie durch ein Fahrzeug, das mit einem erfindungsgemäßen System, welches zur Durchführung des erfindungsgemäßen Verfahrens geeignet ist, ausgestattet ist.

Weitere vorteilhafte Ausgestaltungen und Einzelheiten der Erfindung sind der nachfolgenden Beschreibung zu entnehmen, in der die Erfindung anhand des in der Zeichnung dargestellten Ausführungsbeispiels näher beschrieben und erläutert ist.

In der Zeichnung zeigen:

Fig. 1: ein Fahrzeug mit einem erfindungsgemäßen System mit einem Gegenstand im Fahrzeugnahbereich;
Fig. 2: den Strahlengang des Sendestrahls;
Fig. 3: den reflektierten Sendestrahl in einem Empfangsarray;
Fig. 4: das Fahrzeug gemäß Fig. 1, wobei sich ein Gegenstand im Nahbereich des Fahrzeugs befindet;
Fig. 5: den Strahlengang gemäß Fig. 4; und
Fig. 6: den reflektierten Strahlengang gemäß Fig. 4 in einem Empfangsarray.

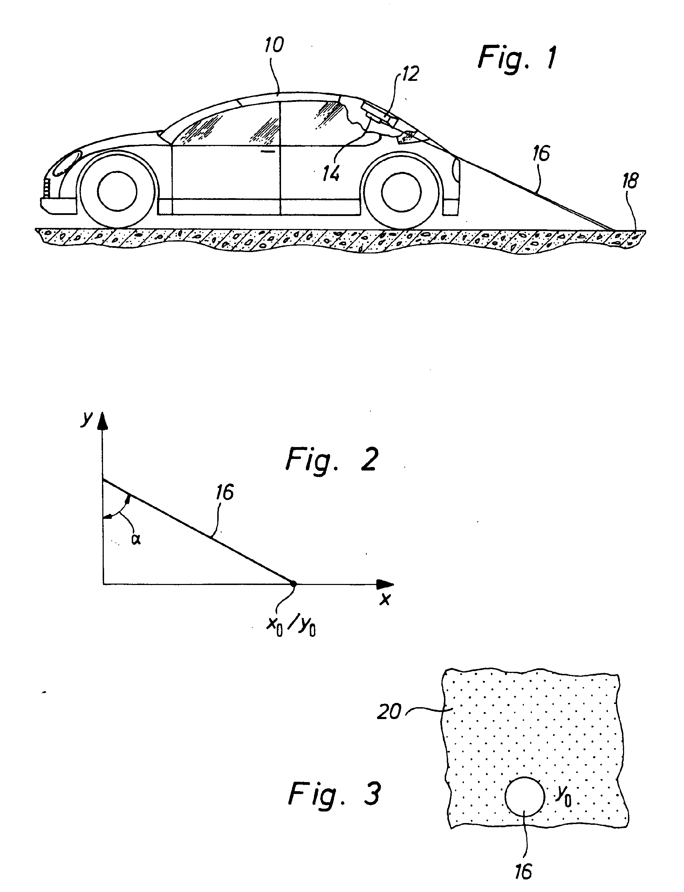

In der Fig. 1 ist ein Fahrzeug 10 dargestellt, an dem eine Kamera 12 fest angeordnet ist. Die Kamera 12 erfasst die Umgebung hinter dem Fahrzeug 10. Im Bereich der Kamera 12 ist eine Strahlenquelle 14 angeordnet, die einen Sendestrahl 16 mit einem sehr geringen Öffnungswinkel in den Bereich hinter das Fahrzeug 10 sendet. Als Strahlenquelle 14 kommt insbesondere ein IR LED mit geringem Öffnungswinkel in Frage.

In der Fig. 1 befindet sich im Bereich hinter dem Fahrzeug 10 kein Gegenstand, der Sendestrahl 16 trifft folglich auf die Straße bzw. den Untergrund 18. Die Kamera 12 erfasst den reflektierten Sendestrahl 16, der auf dem in Fig. 3 schematisch dargestellten Empfangsarray 20 abgebildet wird. Als Empfangsarray 20 findet insbesondere ein CCD/CMOS-Array Verwendung.

Fig. 2 zeigt den Strahlengang 16 zwischen den Koordinaten x und y, wobei x die horizontale und y die vertikale Achse wiedergeben. Aus Fig. 2 wird deutlich, dass die Kamera 12 bzw. die Strahlenquelle 14 gegenüber der Vertikalen (y-Achse) den Sendestrahl 16 unter einem Winkel $\alpha$ in Richtung des Untergrunds 18 (x-Achse) sendet. Da sich in dem Strahlengang des Sendestrahls 16 gemäß Fig. 1 kein Gegenstand befindet, schneidet der Sendestrahl 16 die x-Achse, bzw. die Ebene y=0, im Punkt $x_0/y_0$. Im Array 20 gem. Fig. 3 befindet sich der reflektierte Sendestrahl 16 bzw. der Punkt $x_0/y_0$ im unteren Bereich.

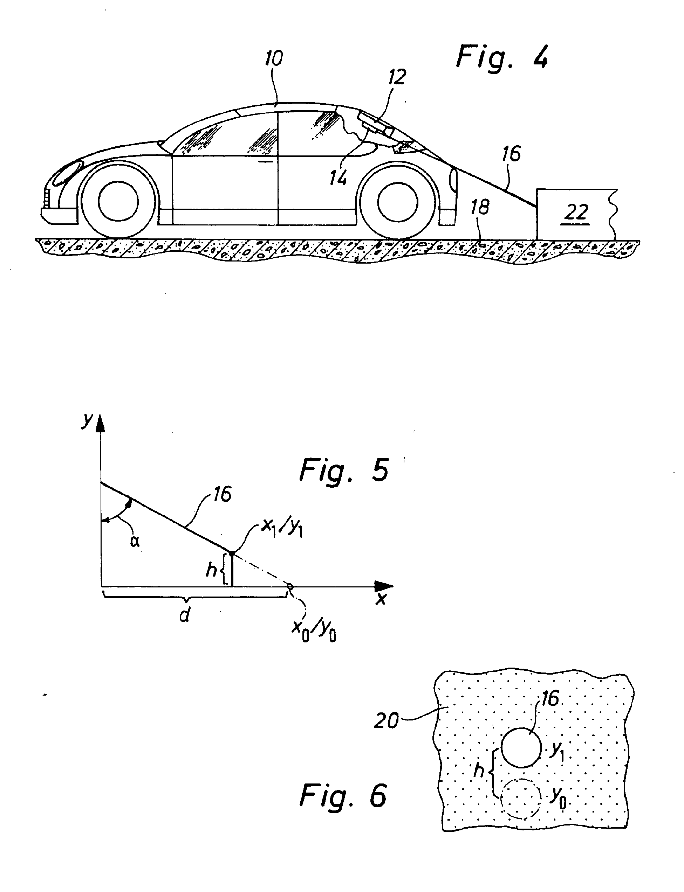

Im Gegensatz zu Fig. 1 ist bei Fig. 4 im Strahlengang des Sendestrahls 16 ein Gegenstand 22 vorhanden. Der Sendestrahl 16 wird folglich an dem Gegenstand 22 reflektiert, und nicht wie in Fig. 1 am Untergrund 18. Gemäß Fig. 5 wird der Sendestrahl 16 im Punkt $x_1/y_1$ reflektiert. Aus der Differenz von $y_1$ und $y_0$ kann, wie in der Fig. 5 bzw. 6 angedeutet, die Höhe h des reflektierten Sendestrahls 16 bzw. des Gegenstandes 22 bestimmt werden, d.h.: $h=y_1-y_0$.

Aufgrund des bekannten Neigungswinkels $\alpha$ der Kamera 12 gegenüber der Vertikalen kann ferner der Abstand d (mit $d=x_1$) des Gegenstandes 22 zu der Kamera 12 bestimmt werden, wobei die Kamera gegenüber dem hinteren Ende des Fahrzeuges etwas zurückversetzt angeordnet ist. Der Abstand d berechnet sich gemäß den geometrischen Verhältnissen nach Fig. 5 folgendermaßen:

$$\tan\alpha=\frac{x_0-d}{h} \text{ , also:}$$

$$d=x_0-h*\tan\alpha, \text{ oder } d=x_0 - (y_1 -y_0)* \tan\alpha$$

Bei bekannten geometrischen Verhältnissen des Fahrzeuges, bzw. bei bekannter Anordnung der Kamera am Fahrzeug, lässt sich der tatsächliche Abstand zwischen Fahrzeug und Gegenstand 22 ermitteln.

Um die gesamte hintere Umgebung des Fahrzeugs 10 auf Gegenstände abzutasten, kann erfindungsgemäß vorgesehen sein, dass der Lichtstrahl 16 von einem ansteuerbaren, nicht dargestellten Spiegel in vorgegebener Art und Weise so abgelenkt wird, dass er den von der Kamera 12 erfassten Bereich abtastet. Aus sich ändernden Positionen des Sendestrahls 16 auf dem Empfangsarray 20 können Gegenstände im Nahbereich bzw. in der Umgebung des Fahrzeugs 10 entsprechend den Erläuterungen zu Fig. 1 bis 6 erfasst werden.

Wird zusätzlich mit einem Wegmesssensor der von dem Fahrzeug zurückgelegte Weg erfasst, kann bestimmt werden, ob der sich in dem Strahlengang befindende Gegenstand 22 sich dem Fahrzeug bei weiterem Manövrieren nähert oder nicht. Ferner kann berechnet werden, wann mit einer Kollision zu rechnen ist, insbesondere auch dann, wenn sich der Gegenstand 22 aufgrund der geometrischen Verhältnisse des Fahrzeuges nicht mehr in dem Strahlengang des Sendestrahls 16 befindet.

Alle in der Beschreibung, den nachfolgenden Ansprüchen und der Zeichnung dargestellten Merkmale können sowohl einzeln als auch in beliebiger Kombination miteinander erfindungswesentlich sein.

**Patentansprüche**

1. Verfahren zur Erfassung von Gegenständen (22) im Nahbereich eines Fahrzeuges (10) und/oder zur präventiven Kollisionswarnung eines Fahrzeuges (10), mit einer am Fahrzeug (10) angeordneten, den Nahbereich bzw. die Umgebung des Fahrzeuges (10) erfassenden Kamera (12), mit einer Strahlenquelle (14), die einen Sendestrahl (16) in den von der Kamera (12) erfassten Bereich sendet, wobei der an dem Untergrund (18) oder an einem Gegenstand (22) reflektierte Sendestrahl (16) auf dem Empfangsarray (20) der Kamera (12) abgebildet wird und aus der Position $(x_0, y_0; x_1, y_1)$ des abgebildeten Sendestrahls (16) auf dem Empfangsarray (20) bestimmt wird, ob Gegenstände (22) im Strahlengang des Sendestrahles (16) vorhanden sind.

2. Verfahren nach Anspruch 1, **dadurch gekennzeichnet, dass** aus dem Winkel ($\alpha$) des Sendestrahls (16) und der Fahrzeuggeometrie der Abstand und die Höhe eines in dem Strahlengang des Sendestrahles (16) vorhandenen Gegenstandes (22) bestimmt wird.

3. Verfahren nach Anspruch 1 oder 2, **dadurch gekennzeichnet, dass** der von dem Fahrzeug (10) zurückgelegte Weg, insbesondere mittels eines Wegmesssensors, erfasst wird und dass aus dem zurückgelegten Weg der Abstand eines in dem Strahlengang des Sendestrahls (16) vorhandenen Gegenstandes (22) bestimmt wird.

4. Verfahren nach einem der vorhergehenden Ansprüche, **dadurch gekennzeichnet, dass** Mittel zur Auffächerung des Sendestrahls (16) vorgesehen sind, so dass mehrere an dem Untergrund (18) oder an einem Gegenstand (22) reflektierte Sendestrahlen (16) auf dem Empfangsarray (20) der Kamera (12) abgebildet werden.

5. Verfahren nach einem der vorhergehenden Ansprüche, **dadurch gekennzeichnet, dass** steuerbare Mittel zum Umlenken des Sendestrahls (16) vorgesehen sind, die den Sendestrahl (16) derart umlenken, dass er wenigstens abschnittsweise den von der Kamera (12) erfassten Bereich abwandert.

6. Verfahren nach Anspruch 5, **dadurch gekennzeichnet, dass** die steuerbaren Mittel einen von einem Steuergerät ansteuerbaren Spiegel umfassen.

7. Verfahren nach wenigstens einem der Ansprüche 4 bis 6, **dadurch gekennzeichnet, dass** der von der Kamera (12) erfasste Bereich wenigstens weitgehend überwacht wird und bei der Gefahr einer Kollision entsprechende Maßnahmen eingeleitet werden.

8. Verfahren nach einem der vorhergehenden Ansprüche, **dadurch gekennzeichnet, dass** der Sendestrahl (16) ein Lichtstrahl, insbesondere eines IR LEDs, mit geringem Öffnungswinkel ist.

9. Verfahren nach einem der vorhergehenden Ansprüche, **dadurch gekennzeichnet, dass** das Empfangsarray (20) der Kamera ein CCD/CMOS Array ist.

10. Steuergerät zur Steuerung des Verfahrens nach einem der vorhergehenden Ansprüche.

11. System mit einer Kamera (12), mit einer Strahlenquelle (14) und mit einem Steuergerät, **dadurch gekennzeichnet, dass** es zur Durchführung des Verfahrens nach einem der Ansprüche 1 bis 9 geeignet ist.

12. Fahrzeug (10) mit einem System nach dem vorhergehenden Anspruch.

Fig. 1

Fig. 2

Fig. 3

Fig. 4

Fig. 5

Fig. 6

Europäisches
Patentamt

**EUROPÄISCHER RECHERCHENBERICHT**

Nummer der Anmeldung

EP 03 00 4370

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,X | EP 1 209 485 A (VALEO SCHALTER & SENSOREN GMBH) 29. Mai 2002 (2002-05-29) * Absatz [0039] - Absatz [0045]; Abbildungen 1-4 * --- | 1,2,4-6 | G01S17/93 |
| X | EP 0 358 628 A (TRANSITIONS RESEARCH CORP) 14. März 1990 (1990-03-14) * Spalte 5, Zeile 10 - Zeile 15 * | 1-3 | |
| Y | * Spalte 10, Zeile 47 - Spalte 13, Zeile 4; Abbildungen 1A,1B,3A,3B * --- | 4-12 | |
| X | EP 0 479 273 A (AISIN SEIKI) 8. April 1992 (1992-04-08) * Zusammenfassung; Abbildungen 1,3,4 * | 1,2 | |
| Y | * Spalte 9, Zeile 5 - Zeile 30 * --- | 3-12 | |
| X | US 6 038 496 A (BETZITZA PETER  ET AL) 14. März 2000 (2000-03-14) | 1,2 | |
| Y | * Spalte 4, Zeile 1 - Zeile 54; Abbildungen 6,7 * --- | 3-12 | RECHERCHIERTE SACHGEBIETE (Int.Cl.7) |
| X | EP 0 617 296 A (PEUGEOT ;RENAULT (FR); CITROEN SA (FR)) 28. September 1994 (1994-09-28) | 1,2 | G01S |
| Y | * Seite 3, Zeile 38 - Seite 6, Zeile 12; Abbildungen 4-7 * ----- | 3-12 | |

Der vorliegende Recherchenbericht wurde für alle Patentansprüche erstellt

| Recherchenort | Abschlußdatum der Recherche | Prüfer |
|---|---|---|
| MÜNCHEN | 10. Juni 2003 | Saur, E |

**ANHANG ZUM EUROPÄISCHEN RECHERCHENBERICHT
ÜBER DIE EUROPÄISCHE PATENTANMELDUNG NR.**

EP 03 00 4370

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-2003

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 1209485 | A | | 29-05-2002 | DE | 10058981 | A1 | 27-06-2002 |
| | | | | EP | 1209485 | A2 | 29-05-2002 |
| EP 0358628 | A | | 14-03-1990 | US | 4954962 | A | 04-09-1990 |
| | | | | EP | 0358628 | A2 | 14-03-1990 |
| | | | | JP | 2170205 | A | 02-07-1990 |
| | | | | US | 5040116 | A | 13-08-1991 |
| EP 0479273 | A | | 08-04-1992 | US | 5202742 | A | 13-04-1993 |
| | | | | DE | 69132251 | D1 | 20-07-2000 |
| | | | | DE | 69132251 | T2 | 14-12-2000 |
| | | | | EP | 0479273 | A2 | 08-04-1992 |
| | | | | JP | 4249785 | A | 04-09-1992 |
| US 6038496 | A | | 14-03-2000 | DE | 19507957 | C1 | 12-09-1996 |
| | | | | DE | 59607148 | D1 | 02-08-2001 |
| | | | | EP | 0736414 | A2 | 09-10-1996 |
| | | | | JP | 2853025 | B2 | 03-02-1999 |
| | | | | JP | 8320992 | A | 03-12-1996 |
| EP 0617296 | A | | 28-09-1994 | FR | 2703173 | A1 | 30-09-1994 |
| | | | | DE | 69409702 | D1 | 28-05-1998 |
| | | | | DE | 69409702 | T2 | 12-11-1998 |
| | | | | EP | 0617296 | A1 | 28-09-1994 |

EPO FORM P0461

Für nähere Einzelheiten zu diesem Anhang : siehe Amtsblatt des Europäischen Patentamts, Nr.12/82